# EUROPEAN PATENT APPLICATION

(11) **EP 3 805 557 A1**
(43) Date of publication of application: **14.04.2021**
(21) Application number: 19810736.9
(22) Date of filing: 05.04.2019
(51) Int. Cl.: F03D 7/04, F03D 80/50

(54) **WIND POWER GENERATION SYSTEM**

(30) Priority: 31.05.2018 JP 2018104530
(71) Applicant: Hitachi, Ltd., Tokyo 100-8280 (JP)
(72) Inventor: KUSUNO, Nobuhiro, Tokyo 100-8280 (JP)
(74) Representative: Strehl Schübel-Hopf & Partner
(86) International application number: PCT/JP2019/015099
(87) International publication number: WO 2019/230191

(57) **Abstract**

Provided is a wind power generation system having a sign diagnostic function that can diagnose an abnormality with high accuracy by switching each piece of diagnostic criteria data for each control mode. The wind power generation system 1 includes a wind turbine controller 15 for controlling a wind turbine 2 and a sign diagnostic unit 16. The sign diagnostic unit 16 receives at least a signal from a monitoring sensor 14 installed in the wind turbine 2 for sign diagnosis and an internal state variable which is a signal representing a wind turbine control state from the wind turbine controller 15, and includes: a diagnostic criteria data generator 19 that creates diagnostic criteria data based on the signal input from the monitoring sensor 14 for each internal state variable, during a learning period of analysis processing data required for sign diagnosis criteria or to execute the sign diagnosis; and a diagnostic unit 22 that executes the diagnosis based on the diagnostic criteria data corresponding to each internal state variable, during a sign diagnosing period.

## Description

### Technical Field

The present invention relates to a wind turbine control device of a wind power generation system, and in particular, relates to a wind turbine power generation system including a sign diagnostic function for detecting a sign of abnormality in hardware such as a generator, a speed increaser, a main shaft, blades, and bearings of rotating parts thereof, all of which constitute the wind turbine (also referred to as a wind power generator), and in software of a control device.

### Background Art

In a wind power generation system, blades are rotated by the wind, and the rotation of the blades is input to the generator via a main shaft and a speed increaser to generate electric power. Because the power generation operation of the wind power generation system depends on wind conditions, the wind power generation system is desirably maintained and managed so that the power generation operation can always be performed. When a failure occurs in the blades, main shaft, speed increaser, generator, bearings that rotatably hold these components, or gears that convert and transmit the rotation speed as power, of the wind power generation system, it takes time to obtain replacement components and conduct replacement work, therefore, a power generation suspension period is prolonged. For this reason, it is required to shorten the power generation suspension period by detecting abnormal signs of the above components and performing maintenance such as lubrication (refueling) in a minor abnormal state to delay the progress of abnormality for the components, or by preparing the replacement components in advance based on the abnormal signs.

For this purpose, diagnostic techniques have been developed for detecting a sign of abnormality by detecting vibration acceleration and temperature rise in the operating state of each component using a sensor, and analyzing the acquired information by the Mahalanobis-Taguchi system or a clustering method.

In these diagnostic techniques, the above detection information such as vibration acceleration and temperature rise is detected for a certain time period during which a diagnosis target device is regarded as being in a normal state, and the normal state of the device is defined. This is generally called a learning period. During a diagnosing period for diagnosing signs of abnormality, a degree of deviation from the normal state is calculated by performing comparative analysis using the above detection information acquired during the time of diagnosis and the criteria or the like determined by the Mahalanobis-Taguchi system obtained during the learning period, and by comparing the degree of deviation with a threshold value or the like defining a degree of abnormality, it is determined whether the sign of abnormality is detected.

In a wind power generation system, because the power generation operation depends on the wind condition, there are a number of states that can be regarded as normal depending on the wind conditions. Even in this case, for example, a technique described in Patent Literature 1 has been proposed as a method for diagnosing a sign of abnormality.

The technique described in Patent Literature 1 includes, in the learning period, in addition to detection data in the operating state of the diagnosis target device, acquiring operating condition data of a wind turbine as the diagnosis target, learning the detection data and the operating condition data, selecting an operating condition to be diagnosed from the learned information of the operating condition data, and learning the detection data that is acquired at the same time as the operating condition data matching the selected operating condition, to define the normal state. Even during the diagnosing period, the detection data and the operating condition data are acquired at the same time, and the detection data acquired at the same time as the operating condition data that matches the selected operating condition is compared and analyzed according to the criteria or the like determined by the analysis method to determine whether the sign of abnormality is detected. In this way, by learning and selecting the operating condition data, multiple states regarded as normal for the wind turbine are defined.

### Citation List

### Patent Literature

PTL 1: JP 2013-185507 A

### Summary of Invention

### Technical Problem

Because the power generation operation of the wind power generation system depends on the wind conditions, a wind turbine control device is being studied so as to maximize the power generation efficiency at every moment.

In general, the wind power generation system has a power converter that adjusts the torque of a generator, a pitch actuator that adjusts the wind receiving angle (pitch angle) of the blade, and a yaw actuator that changes a turning direction of the nacelle on which the blades, main shaft, speed increaser, and generator are installed to make the blades face the wind direction. The wind turbine control device maximizes the power generation efficiency by transmitting control commands to the above actuators.

For example, in a low wind speed range in which the wind speed is low, the actuators are operated so as to maximize the aerodynamic characteristics of the blades. In general, the power generation efficiency is maximized by operating the pitch actuator so as to hold an angle determined by the shape of the blade, which is usually called a fine pitch angle, and operating the torque of the generator by the power converter. In a high wind speed range in which the wind speed is high, the pitch actuator and the power converter are operated so that the blade rotation speed and the generator torque become constant in consideration of the load due to the centrifugal force applied to the blade, the maximum torque that the generator can output, and the like.

In a wind speed range in which the wind speed is higher, the operation of stopping the power generation operation and reducing the load received from the wind (storm load) for the purpose of protecting the wind power generation system is performed.

In this way, in the wind power generation system, the wind turbine control device sends a control command to each actuator according to the wind condition at every moment and in correspondence to different purposes, and each actuator operates to set the operation status of the wind turbine. Therefore, if the device in which the abnormality is detected is the actuator itself or a component thereof, a malfunction occurs in the actuator because the abnormality is occurring. This causes mismatch with the purpose of the wind turbine control device, and there is a possibility of acquiring the same operating condition data as when the wind turbine control device is functioning for other purposes. Further, because the operating condition data is the same as when the wind turbine control device is functioning for other purposes, as a result, the detection data as the diagnosis target may become the same as the detection data for other purposes.

Therefore, in the configuration described in Patent Literature 1 for determining whether the operating condition as the diagnosis target is met by acquiring the operating condition data, there is a possibility of determining that the wind turbine is normal even if the abnormality is occurring therein, and there is a concern of making erroneous determination.

Therefore, the present invention provides a wind power generation system having a sign diagnostic function capable of diagnosing an abnormality with high accuracy by switching each piece of diagnostic criteria data for each control mode.

### Solution to Problem

In order to solve the above problem, the wind power generation system according to the present invention includes a wind turbine controller that controls a wind turbine, and a sign diagnostic unit. The sign diagnostic unit receives at least a signal from a monitoring sensor installed in the wind turbine for sign diagnosis and an internal state variable which is a signal representing a wind turbine control state from the wind turbine controller, and includes: a diagnostic criteria data generator that creates diagnostic criteria data based on the signal input from the monitoring sensor for each internal state variable, during a learning period of analysis processing data required for sign diagnosis criteria or to execute the sign diagnosis; and a diagnostic unit that executes the diagnosis based on the diagnostic criteria data corresponding to each internal state variable, during a sign diagnosing period.

Further, another wind power generation system according to the present invention includes a wind turbine controller that controls a wind turbine, and a sign diagnostic unit. The sign diagnostic unit receives at least a signal from a control sensor received by the wind turbine controller to control the wind turbine and a control command transmitted from the wind turbine controller to the wind turbine, and an internal state variable which is a signal representing a wind turbine control state from the wind turbine controller, and includes: a diagnostic criteria data generator that creates diagnostic criteria data based on the signal input from the monitoring sensor for each internal state variable, during a learning period of analysis processing data required for sign diagnosis criteria or to execute the sign diagnosis; and a diagnostic unit that executes the diagnosis based on the diagnostic criteria data corresponding to each internal state variable, during a sign diagnosing period.

### Advantageous Effects of Invention

According to the present invention, it becomes possible to provide the wind power generation system having the sign diagnostic function capable of diagnosing an abnormality with high accuracy by switching each piece of diagnostic criteria data for each control mode.

Problems, configurations, and effects other than those described above will become apparent from the following description of the embodiments.

### Brief Description of Drawings

[FIG. 1] FIG. 1 is an overall schematic configuration diagram of an ordinary wind power generation system and a sign diagnostic device.
[FIG. 2] FIG. 2 is an explanatory diagram illustrating the relationship between the average wind speed of the wind turbine control device, and command values of the pitch angle and the rotation speed.
[FIG. 3] FIG. 3 is an overall schematic configuration diagram of a wind power generation system and a wind turbine control device of a first embodiment according to one embodiment of the present invention.
[FIG. 4] FIG. 4 is a comparison diagram of occurrence frequency distributions of detected values of vibration acceleration according to the ordinary mode shown in FIG. 1 and the first embodiment shown in FIG. 3.
[FIG. 5] FIG. 5 is a diagram showing an outline of diagnosis results of the sign diagnostic unit shown in FIG. 3.
[FIG. 6] FIG. 6 is an overall schematic configuration diagram of a wind power generation system and a wind turbine control device of a second embodiment according to another embodiment of the present invention.
[FIG. 7] FIG. 7 is an overall schematic configuration diagram of a wind power generation system and a wind turbine control device of a third embodiment according to another embodiment of the present invention.
[FIG. 8] FIG. 8 is an overall schematic configuration diagram of a wind power generation system and a wind turbine control device of a fourth embodiment according to another embodiment of the present invention.
[FIG. 9] FIG. 9 is an overall schematic configuration diagram of a wind power generation system and a wind turbine control device of a fifth embodiment according to another embodiment of the present invention.

### Description of Embodiments

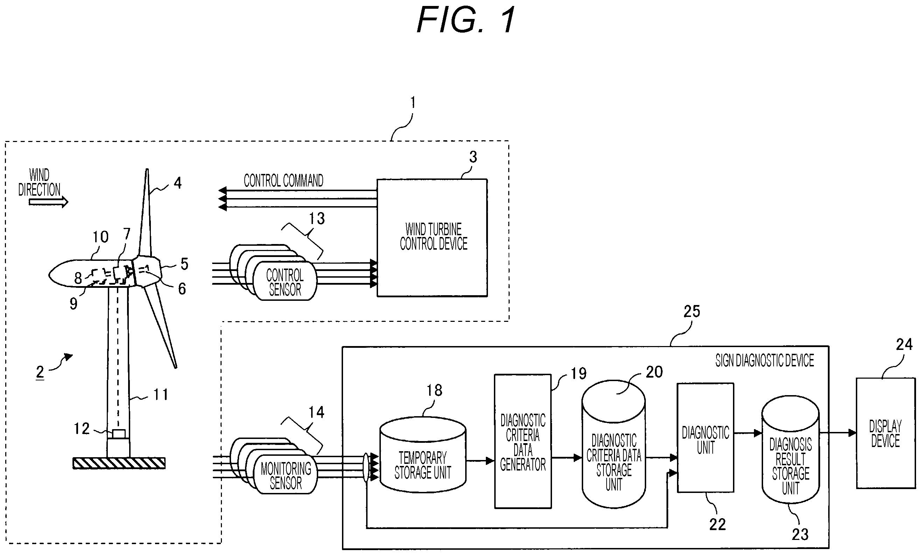

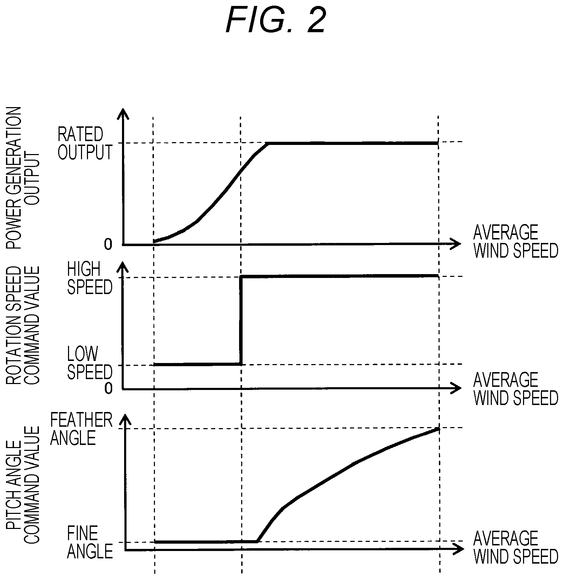

First, an outline of a wind power generation system and a sign diagnostic device to which the present invention is applied is described. FIG. 1 is an overall schematic configuration diagram of a wind power generation system and a sign diagnostic device before the present invention is applied, that is, an ordinary wind power generation system and a sign diagnostic device. FIG. 2 shows an outline of the operation of a wind turbine with respect to the average wind speed, and is an explanatory diagram illustrating the relationship between the average wind speed of the wind turbine control device, and command values of the pitch angle and the rotation speed.

As shown in FIG. 1, the wind power generation system 1 includes a wind turbine 2 (also referred to as a wind power generator) and a wind turbine control device 3 for controlling the wind turbine 2. The wind turbine 2 has at least one or more blades 4 that rotate by receiving the wind, and a hub 5 for supporting the blades 4. The hub 5 is connected to a speed increaser 7 and a generator 8 installed on a frame 9 in a nacelle 10 via a main shaft 6. The blades 4, the hub 5, the main shaft 6, the speed increaser 7, and the generator 8 are rotatably held by using bearings which are not shown, the blades 4 are rotated by receiving the wind, and the rotational force is transmitted through the mechanism described above and is input to the generator 8. Because the aerodynamic characteristics that convert the wind energy of the blades 4 into rotational force change depending on the wind speed, the rotational speed of the blade 4, and the mounting angle of the blade 4 (hereinafter referred to as the pitch angle), the hub 5 has installed therein a pitch driving device (not shown) which can independently control the pitch angle of each of the blades 4. Further, the generator 8 is usually electrically connected to a power converter 12 installed in the base of a tower 11, and the power converter 12 controls the torque generated by the generator 8. Further, the nacelle 10 can be turned with respect to the tower 11 by a yaw driving device which is not shown. The pitch driving device, the power converter 12, and the yaw driving device control the wind turbine 2 such that the power generation output of the wind turbine 2 is maximized in a wind speed range in which the wind turbine 2 can generate electric power.

In order to control and perform status monitoring on the wind turbine 2, the wind power generation system 1 is provided with a control sensor 13 for acquiring the operating status and a monitoring sensor (not shown) for monitoring the operating status for the wind turbine control device 3. A sensor signal acquired by the control sensor 13 is processed by control logic implemented in the wind turbine control device 3. This control logic is constructed so as to maximize the power generation output of the wind turbine 2 in the wind speed range in which the wind turbine 2 can generate electric power.

FIG. 2 shows, as an example of execution of the control logic, the relationship of the power generation output of the wind power generation system with respect to the average wind speed, a rotation speed command value inside the wind turbine control device 3 with respect to the average wind speed, and a pitch angle command value transmitted from the wind turbine control device 3 to the pitch driving device with respect to the average wind speed. In the wind turbine control device 3, a deviation between the rotation speed command value and the measured rotation speed is input, converted by feed forward control into the torque command value or the generated power command value, and transmitted to the power converter 12. At the wind speed at which the wind turbine 2 can generate electric power, the pitch angle command value of the blade 4 is kept constant in the low wind speed range, and the power converter 12 outputs the torque to the generator 8 to keep the rotation speed of the blade 4 at low speed. Each command value is kept as described above, but as the wind speed increases, the torque reaches to its upper limit controlled by the power converter 12, and the rotation speed of the blade 4 increases due to the torque caused by the surplus wind energy. When the number of rotations exceeds a predetermined value, the rotation speed command value inside the wind turbine control device 3 is switched to the one that keeps the rotation speed of the blade 4 at high speed. When the wind speed further increases, the wind energy increases, and the rotation speed becomes difficult to be kept at a constant value simply by controlling the torque of the generator 8. Therefore, the wind turbine 2 is controlled to increase the pitch angle and reduce the aerodynamic characteristics of the blade 4, in order to reduce the wind energy received from the wind and keep the power generation output constant (at the rated output).

Further, when the wind speed is lower than the wind speed range in which the wind turbine 2 can generate electric power, the wind turbine 2 is controlled to stand by for shifting to the state of being able to generate electric power when the wind speed increases. Further, when the wind speed is higher than the wind speed range in which the wind turbine 2 can generate electric power, the wind turbine 2 is controlled to reduce the load applied to each instrument constituting the wind turbine 2 for the purpose of protecting the instruments constituting the wind turbine 2.

As shown in FIG. 1, a sign diagnostic device 25 is generally provided as a function of detecting an abnormal sign of the instruments constituting the wind turbine 2. The sign diagnostic device 25 includes a monitoring sensor 14 that measures vibration acceleration, temperature, and the like according to the physical behavior of the diagnosis target instrument in the wind turbine 2, and inputs a detected value of the monitoring sensor 14. A plurality of diagnostic algorithms used for sign diagnosis have been proposed, but in any of the methods, there are two operation periods: a learning period of creating diagnostic criteria and basic data (hereinafter, referred to as diagnostic criteria data) for diagnostic processing according to the diagnostic algorithm from the detected value of the monitoring sensor 14; and a diagnosing period of diagnosing the diagnosis target instrument in the wind turbine 2 based on the created diagnostic criteria data. In the following, the explanation of the sign diagnostic technique is described on the premise that the Mahalanobis-Taguchi system utilizing statistics is used.

During the learning period of the sign diagnostic device 25, the detected value of the monitoring sensor 14 is stored in a temporary storage unit 18. Data accumulated for a predetermined period is processed into diagnostic criteria data by a diagnostic criteria data generator 19 and stored in a diagnostic criteria data storage unit 20. Because the Mahalanobis-Taguchi system assumes that the occurrence frequency distribution of detected values forms a normal distribution, the processing content of the diagnostic criteria data generator 19 is to obtain mean and variance, which are mathematical parameters of the normal distribution, from the occurrence frequency distribution of the detected values. In the case of creating the diagnostic criteria data by acquiring a plurality of detected values from a diagnosis target, the diagnostic criteria data becomes a covariance matrix with an average value vector of each physical quantity.

During the diagnosing period of the sign diagnostic device 25, the detected values of the monitoring sensor 14 are input to a diagnostic unit 22 together with the diagnostic criteria data, and a diagnosis result is output. The diagnosis result output from the diagnostic unit 22 is stored in a diagnosis result storage unit 23. The diagnosis result output by the diagnostic unit 22 corresponds to the value obtained by standardizing the deviation distance from the average value of the detected values by the covariance matrix when the Mahalanobis-Taguchi system is adopted as the diagnostic algorithm, and it means that the larger the numerical value is, the more it is deviated from the state of the diagnosis target instrument in the learning period regarded as normal, that is, the higher the degree of abnormality is.

In the above description of the processing outline, the descriptions regarding the pre-processing such as noise reduction processing for the detected value and the post-processing for the diagnosis result output by the diagnostic unit 22 are omitted because the processing is not directly related to the present invention. Needless to say, the processing contents implemented in the diagnostic criteria data generator 19 and the diagnostic unit 22 depend on the sign diagnostic algorithm to be adopted.

In general, the sign diagnosis may be performed every time the monitoring sensor 14 performs detection, or may be performed intermittently at a specific time interval or the like. In any case, the result of each diagnosis is stored in the diagnosis result storage unit 23, and by displaying the diagnosis result and accompanying related data (for example, the operation history of the wind turbine such as the wind speed and the rotation speed of the wind turbine at the time of diagnosis, detected values and diagnostic criteria data used in the diagnosis, original data used for creating the diagnostic criteria data and stored in the temporary storage unit 18, etc.) on a display device 24 in chronological order, an operator of the sign diagnostic device 25 can confirm the signs of abnormality in the wind power generation system 1. Note that, the display device 24 is, for example, a liquid crystal display (LCD) or an organic electroluminescence (EL) display. Further, the display device 24 may be configured to have an input device such as a keyboard or a mouse, that is, configured as an operation terminal.

The diagnostic criteria data generator 19 and the diagnostic unit 22 described above are embodied by having, for example, a processor such as a central processing unit (CPU), a read only memory (ROM) for storing various programs, a random access memory (RAM) for temporarily storing data during calculation processing, and a storage device such as an external storage device, which are not shown, and are operated by the processor such as the CPU reading the programs stored in the ROM and executing the programs, and storing the calculation result as the execution result in the RAM or the external storage device.

Hereinafter, embodiments of the wind power generation system 1 according to the present invention are described in detail with reference to the drawings. In each figure, the common constituent elements are designated by the same reference numerals.

### [First embodiment]

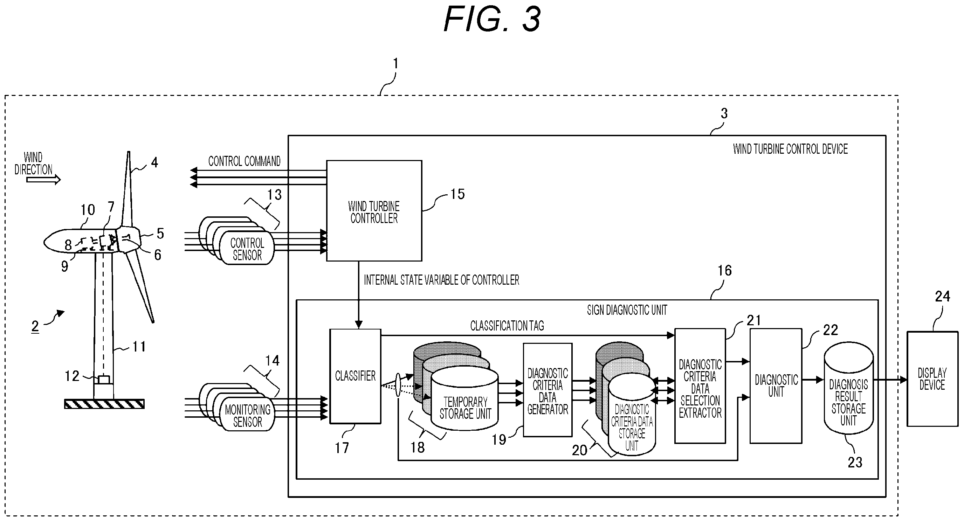

FIG. 3 is an overall schematic configuration diagram of a wind power generation system and a wind turbine control device of a first embodiment according to one embodiment of the present invention. As shown in FIG. 3, the wind power generation system 1 according to the present embodiment is different from the above-described ordinary wind power generation system shown in FIG. 1 in that, inside a wind turbine control device 3, a function related to the control of a wind turbine 2 is implemented as a wind turbine controller 15 and a function of the sign diagnostic device 25 is implemented as a sign diagnostic unit 16. Furthermore, in contrast to the above-described ordinary sign diagnostic device 25 shown in FIG. 1, the sign diagnostic unit 16 has a classifier 17 and a diagnostic criteria data selection extractor 21 added, and has storage functions of the temporary storage unit 18 and the diagnostic criteria data storage unit 20 expanded. Here, the classifier 17 and the diagnostic criteria data selection extractor 21 constituting the sign diagnostic unit 16 are embodied by having, for example, a processor such as a CPU, a ROM for storing various programs, a RAM for temporarily storing data during calculation processing, and a storage device such as an external storage device, which are not shown, and are operated by the processor such as the CPU reading and executing the programs stored in the ROM, and storing the calculation result as the execution result in the RAM or the external storage device.

The installation of the wind turbine controller 15 and the sign diagnostic unit 16 in the wind turbine control device 3 may be constructed on the same computer resource or on different computer resources. In the case of constructing the installation of the wind turbine controller 15 and the sign diagnostic unit 16 in the wind turbine control device 3 on the same computer resource (in the former case), because reference made on an internal state variable and a control command value of the wind turbine controller 15 described in detail later can be shared based on the reference authority of the dynamic memory, there is no additional communication device or any delay in communication processing. On the other hand, in the case of constructing the installation of the wind turbine controller 15 and the sign diagnostic unit 16 in the wind turbine control device 3 on different computer resources (in the latter case), the above-described additions and delays related to communication occur. However, if there is no operational problem in the control of the wind turbine 2 and the provision of the sign diagnostic function due to the addition or delay related to communication, by installing the wind turbine controller 15 and the sign diagnostic unit 16 on separate computer resources, the possibility of a malfunction of the sign diagnostic unit 16 (such as a freeze of calculation processing due to an excessive calculation load of sign diagnostic algorithm processing causing thermal runaway of a calculation unit) affecting the operation of the wind turbine controller 15 can be reduced, and therefore, the power generation operation, which is the originally intended operation of the wind turbine 2, is not interfered. The added functions and their effects are described below.

The classifier 17 inputs at least the internal state variable of the wind turbine controller 15 and the detected value of the monitoring sensor 14 provided in the monitoring target. In the classifier 17, the input internal state variable of the wind turbine controller 15 is used as an index, and the detected value of the monitoring sensor 14 simultaneously input is stored in the expanded temporary storage unit 18 corresponding to each index. In other words, the classifier 17 uses the input internal state variable of the wind turbine controller 15 as an index, and stores the detected value of the monitoring sensor 14 in the temporary storage unit 18 corresponding to the index among the plurality of temporary storage units 18.

At this time, it is desirable that the internal state variable is an index representing the control logic being executed by the wind turbine controller 15. For example, when the wind power generation system 1 is in power generation operation, the index is preferably the one that uses the control mode, such as an index indicating whether the system is operating in a low speed mode in which the rotation speed command value is low speed or operating in a high speed mode in which the rotation speed command value is high speed, as shown in FIG. 2. In addition, the index may be the one that uses the control mode including the time other than during the power generation operation, such as the control mode indicating whether the wind power generation system 1 is in the standby waiting for the wind or in standby due to a storm, in the starting process or stopping process in the wind condition of the low wind speed range, or in the starting process or stopping process in the wind condition of the high wind speed range, including cases in which the wind conditions are not suitable for the power generation operation. A designer of the wind power generation system 1 can grasp the number of control modes of the control logic in advance, and only for the control modes being the diagnosis target among all the control modes, the classifier 17 operates to perform storage in the corresponding temporary storage unit 18. The temporary storage unit 18 has a data holding function for making the respective classifications according to the above number of control modes, before storing and referencing the data.

Next, when a predetermined amount of data is stored in the temporary storage unit 18, the diagnostic criteria data generator 19 creates the diagnostic criteria data using the stored data. In contrast to the ordinary mode shown in FIG. 1 described above, although the diagnostic criteria data generators 19 of the ordinary mode (FIG. 1) and the present embodiment execute the same processing contents, because the temporary storage unit 18 according to the present embodiment holds a plurality of stored data according to the control mode, and the diagnostic criteria data is output in response to each input, the diagnostic criteria data storage unit 20 is constructed in a form having the data holding function that classifies the data before storing and referencing the data.

The above-described function is the function of the sign diagnostic unit 16 during the learning period of the sign diagnostic function.

In the diagnosing period of the sign diagnostic function, the classifier 17 provides the same function as in the learning period, and outputs a classification tag as the classification result for the detected value of the monitoring sensor 14. The output classification tag is input to the diagnostic criteria data selection extractor 21. The diagnostic criteria data selection extractor 21 selects or extracts diagnostic criteria data corresponding to the classification tag from the diagnostic criteria data storage unit 20 according to the input classification tag, and outputs the diagnostic criteria data to the diagnostic unit 22.

The diagnostic unit 22 uses the diagnostic criteria data from the diagnostic criteria data selection extractor 21 and the detected value of the monitoring sensor 14 being the output from the classifier 17 as inputs, similarly to the ordinary mode (FIG. 1), and calculates the diagnosis result by the sign diagnostic algorithm.

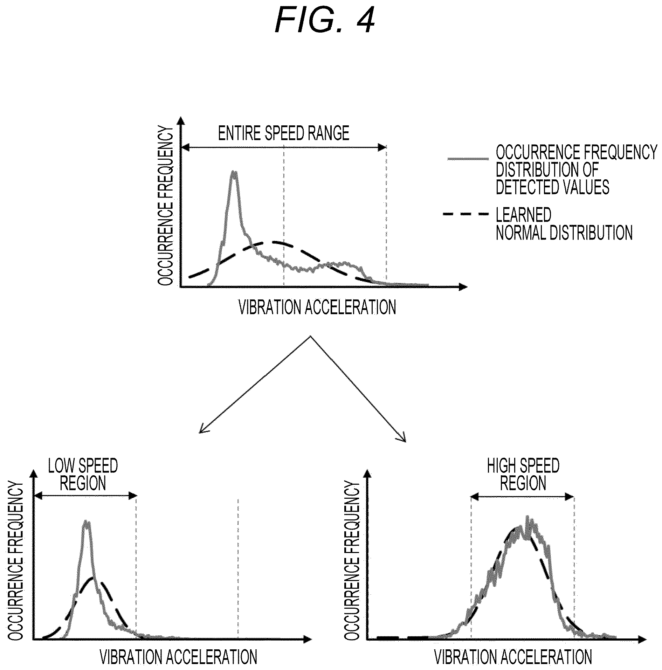

FIG. 4 is a comparison diagram of occurrence frequency distributions of the detected values of the vibration acceleration according to the ordinary mode shown in FIG. 1 and the first embodiment shown in FIG. 3. That is, FIG. 4 shows a comparative example of the diagnostic criteria data according to the ordinary mode (FIG. 1) and the present embodiment. The example shown in FIG. 4 shows the occurrence frequency distribution of the vibration acceleration generated in a rotating part of the wind turbine 2 in the case of using the rotation speed as the index of the control mode. A solid line is the occurrence frequency distribution of the detected values, and a broken line is the learned normal distribution. In the ordinary mode (FIG. 1), as shown in the graph on the upper part of FIG. 4, the classification is not particularly performed in neither of the cases in which the rotation speed command value is the low speed or the high speed, and the learning is performed in the mixed state. Therefore, the occurrence frequency distribution of vibration acceleration has two peaks in the entire speed range, and the deviation from the learned normal distribution shown by the broken line is large. In the diagnosis, normal/abnormal determination is performed by calculating the occurrence frequency probability of the detected value in the diagnosing period on the basis of the learned normal distribution. Therefore, the diagnostic criteria have low accuracy from the beginning, and thus the determination accuracy is lowered.

On the other hand, in the case of the present embodiment, as shown in the graph on the lower part of FIG. 4, the limitation is made to either the rotation speed command value of the low speed or the rotation speed command value of the high speed, and therefore, the degree of deviation between the vibration acceleration and the occurrence frequency distribution that are learned individually for each case and the learned normal distribution is clearly small, as compared to the case of the ordinary mode (FIG. 1) (graph on the upper part of FIG. 4). Therefore, highly accurate diagnosis can be performed by switching the diagnostic criteria data for each control mode.

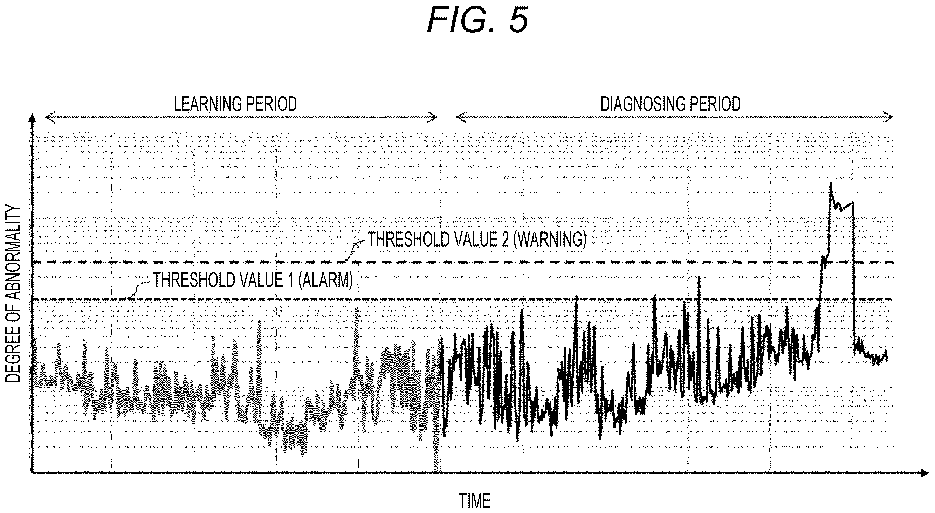

FIG. 5 is a diagram showing an outline of diagnosis results of the sign diagnostic unit 16 shown in FIG. 3. The diagnosis result is determined by the degree of deviation of the detected value from the normal state according to the occurrence frequency probability of the learned normal distribution. By setting the horizontal axis as the time series in the order of measurement, and the vertical axis as a degree of abnormality, the abnormality sign is determined to be detected when the degree of abnormality exceeds a specific threshold value. Although a threshold value 1 and a threshold value 2 are illustrated in FIG. 5, there do not necessarily have to be two threshold values, and at least one or more threshold values may be defined by a statistical standard or an experience value of a worker in the past. In the example shown in FIG. 5, an alarm is set when the threshold value 1 is exceeded, and a warning is set when the threshold value 2 is exceeded. Depending on each of the above cases, for example, corresponding action may be defined such as remote confirmation of the operating status of the wind turbine 2 when the alarm is issued, and on-site inspection when the warning is issued. It is also possible to provide operational measures such as to establish alarm conditions by counting the number of times the threshold value is exceeded. With this configuration, the execution of the action can be determined by considering the balance between issuing a false alarm when the threshold value is exceeded even though there is no abnormality in the wind turbine 2 and failing to issue an alarm even when the abnormality is actually occurring in the wind turbine 2 because the threshold value is not exceeded.

Further, in the sign diagnostic unit 16, the classifier 17, the temporary storage unit 18, the diagnostic criteria data generator 19, and the diagnostic criteria data storage unit 20, which are executed during the learning period, and the classifier 17, the diagnostic criteria data storage unit 20, the diagnostic criteria data selection extractor 21, the diagnostic unit 22, and the diagnosis result storage unit 23, which are executed during the diagnosing period, share only the diagnostic criteria data storage unit 20. Therefore, as long as the write access in the learning period and the read access in the diagnosing period guarantee exclusive access so as not to cause data damage, the learning period may overlap with the diagnosing period. Accordingly, for example, by adding the temporary storage unit 18 with a function of discarding the past data of a certain period of time, or adding the diagnostic criteria data generator 19 with a process of reducing an evaluation scale of the past data of a certain period of time, the diagnosis can be performed while the diagnosis criteria are constantly learned and updated. As a result, it becomes possible to suppress erroneous detection of an abnormality for a tendency that the detected value of the monitoring sensor 14 changes due to the originally intended use of the instrument such as deterioration over time. Further, in the process of reducing the evaluation scale of the past data of a certain period, if the data acquired in the past is unnecessary, the temporary storage unit 18 may be eliminated from the sign diagnostic unit 16, and every time the detection data is acquired, the diagnostic criteria data generator 19 may be operated and the diagnostic criteria data storage unit 20 may store the detected data according to the classification tag of the classifier 17. Accordingly, the calculation resources can be reduced.

As described above, according to the present embodiment, the wind power generation system can be provided, which has the sign diagnostic function capable of diagnosing an abnormality with high accuracy by switching each diagnostic criteria data for each control mode.

Further, according to the present embodiment, the diagnostic criteria data can be learned and the sign diagnosis can be performed for each control method exhibiting the functions in the power generation operation, without acquiring the operating condition data. Furthermore, because the type and the maximum number of control methods take into consideration the internal configuration of the control in advance, it is possible to prevent missing of learning or human error in setting operating conditions.

Furthermore, because there is no need to learn the operating conditions, not only the cost for data communication and data storage is not required, but also the cost of the communication instrument can be reduced, in the case of incorporating the wind turbine controller and the sign diagnostic unit in the wind turbine control device, by directly referring to the information in the wind turbine controller.

### [Second embodiment]

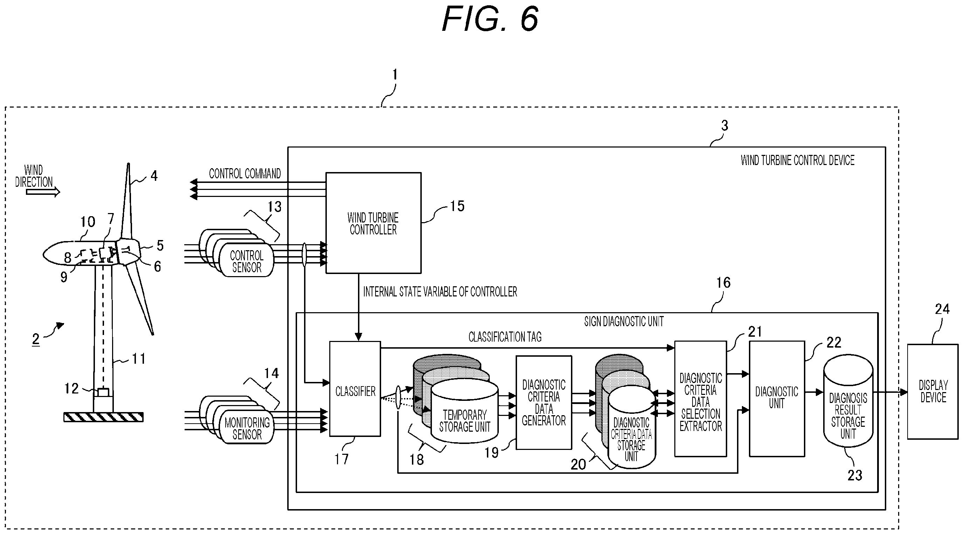

FIG. 6 is an overall schematic configuration diagram of a wind power generation system and a wind turbine control device of a second embodiment according to another embodiment of the present invention. The present embodiment has a different configuration from the first embodiment in that, in addition to the internal state variable of the wind turbine controller 15 and the detected value of the monitoring sensor 14 provided in the monitoring target, a detected value of the control sensor 13 that acquires the operation status is also input to the classifier 17 constituting the sign diagnostic unit 16. The same constituent elements as in the first embodiment are designated by the same reference numerals, and the description overlapping with the first embodiment is omitted below.

As shown in FIG. 6, in the wind power generation system 1 according to the present embodiment, as compared with the above-described first embodiment, because the wind turbine control device 3 is installed with the wind turbine controller 15 and the sign diagnostic unit 16, the detected value of the control sensor 13 input to the wind turbine controller 15 is also input to the classifier 17 constituting the sign diagnostic unit 16. The value detected by the control sensor 13 is a detected value of an amount that a control target device is controlled.

That is, the detected value is a physical quantity that represents the status of the device. Therefore, the number of abnormal diagnosis targets can be increased by adding the values detected by the control sensor 13 to the abnormality diagnosis.

As described above, according to the present embodiment, in addition to the effects of the first embodiment described above, the number of abnormal diagnosis targets can be increased.

### [Third embodiment]

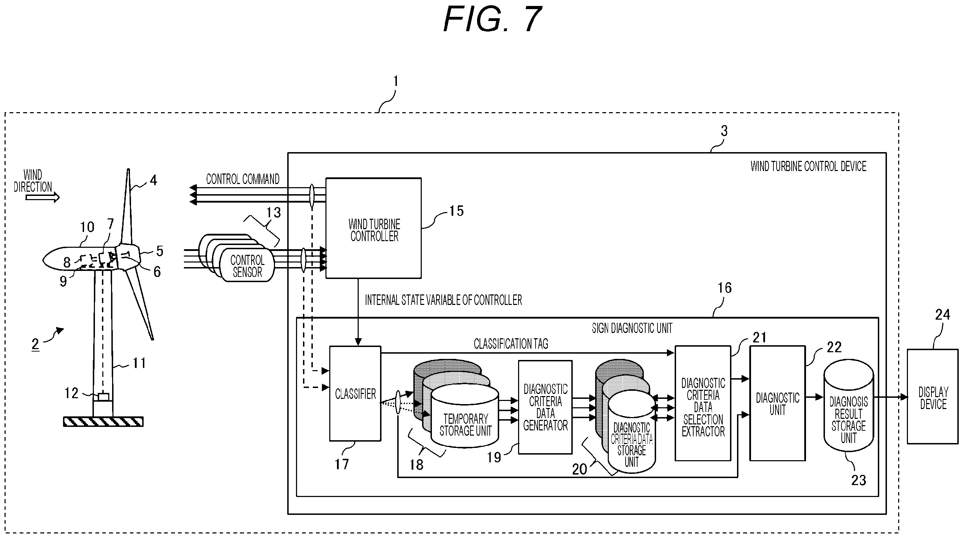

FIG. 7 is an overall schematic configuration diagram of a wind power generation system and a wind turbine control device of a third embodiment according to another embodiment of the present invention. The present embodiment is different from the first embodiment in that, in place of the detected value of the monitoring sensor 14 provided in the monitoring target, a control command of the wind turbine controller 15 and the detected value of the control sensor 13 are used as the inputs to the classifier 17 constituting the sign diagnostic unit 16. Further, the present embodiment is different from the second embodiment in that, in place of the detected value of the monitoring sensor 14 provided in the monitoring target, the control command of the wind turbine controller 15 is used as the input to the classifier 17 constituting the sign diagnostic unit 16. The same constituent elements as those in the first or second embodiment are designated by the same reference numerals, and the description overlapping with the first and second embodiments is omitted below.

As shown in FIG. 7, in the wind power generation system 1 according to the present embodiment, the control command of the wind turbine controller 15 and the detected value of the control sensor 13 are input to the classifier 17 constituting the sign diagnostic unit 16. This enables the detection of deviation from the originally intended operation of the control target instrument for the control command. Because the mechanical operation of the instrument may be delayed by a certain time period with respect to the control command, in consideration of a predetermined delayed time period, pieces of data of the control command and the detected value of the control sensor 13 input to the classifier 17 may not be paired with each other for those simultaneously input, but with the command value input to the classifier 17, the input of the control sensor 13 input to the classifier 17 after the predetermined delayed time period may be paired before the pair is stored in the temporary storage unit 18.

As described above, according to the present embodiment, in addition to the effect of the first embodiment, not only the detection data of the diagnosis target can be acquired from the sensor provided in the instruments, while setting the instruments constituting the wind turbine and its constituent components as the diagnosis target for performing the sign diagnosis, but also the control command value output from the wind turbine control device 3 to each actuator can be set as the diagnosis target. And further, the sign of abnormality in the control software can also be detected by detecting the sign of abnormality in the control command value output in a control mode exhibiting the functions in the power generation operation.

### [Fourth embodiment]

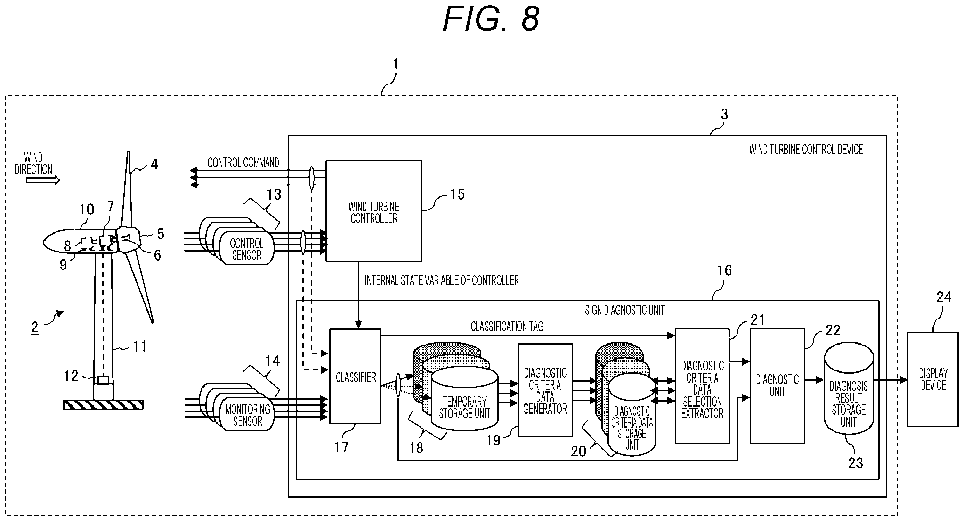

FIG. 8 is an overall schematic configuration diagram of a wind power generation system and a wind turbine control device of a fourth embodiment according to another embodiment of the present invention. In the present embodiment, the input to the classifier 17 constituting the sign diagnostic unit 16 is configured to include the above-mentioned first to third embodiments.

As shown in FIG. 8, all the detected values from the sensors provided in the wind turbine 2 are input to the classifier 17.

As a result, not only the physical quantities of the control and the instruments but also the physical quantities related to the environmental conditions of the wind turbine 2 such as the wind speed and the outside air temperature can be utilized for the abnormality diagnosis. By utilizing the turbulence intensity, which is a measure of wind speed conditions and temporal fluctuations of the wind speed, for the abnormality diagnosis, the correlation between the increase and decrease in the detected value of the monitoring target instrument acquired by the monitoring sensor 14 and the turbulence intensity of the wind being a factor of essentially causing variation in the driving operation of the wind turbine 2 can be utilized in the abnormality diagnosis. Accordingly, the detection accuracy of the diagnostic algorithm that diagnoses the abnormality by the variation of the detected value can be improved. Alternatively, in the case of the storm condition caused by such as a typhoon, this case can be excluded from the diagnosis target because the condition is different from the normal power generation operation environment, and therefore, the issuing of false alarms can be reduced.

### [Fifth embodiment]

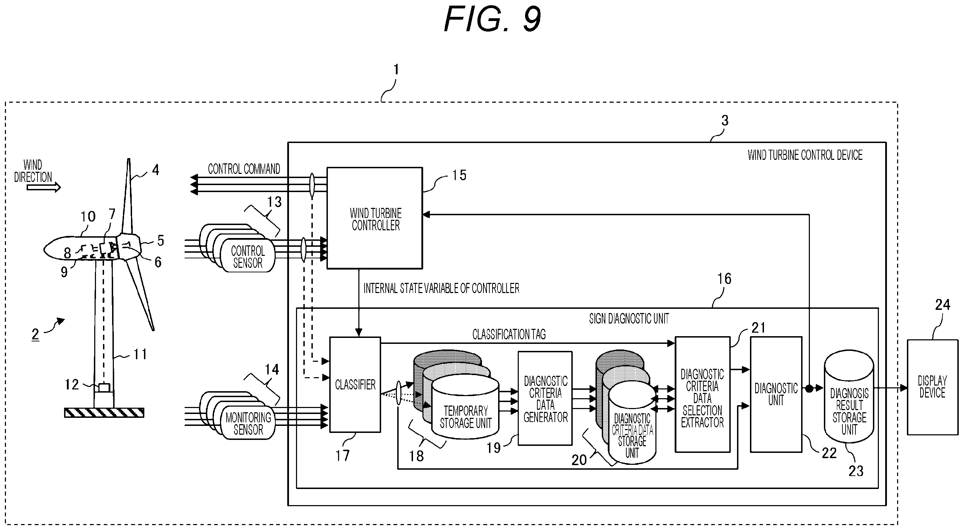

FIG. 9 is an overall schematic configuration diagram of a wind power generation system and a wind turbine control device of a fifth embodiment according to another embodiment of the present invention. The present embodiment is different from the fourth embodiment in that a configuration is added in which the degree of abnormality output by the diagnostic unit 22 is input to the wind turbine controller 15.

As shown in FIG. 9, in the wind power generation system 1 according to the present embodiment, because the degree of abnormality output by the diagnostic unit 22 is configured to be input to the wind turbine controller 15, the wind turbine controller 15 can shift to various degenerate modes such as a control mode of reducing the load at the abnormal site and a control mode of reducing the number of operation of the instrument having a high degree of abnormality, according to the degree of abnormality of the diagnostic unit 22. As a result, it becomes possible to suppress the further development of the abnormality and to extend the life of the wind turbine until the time of visual inspection by a maintenance worker.

The configuration of the present embodiment in which the degree of abnormality output by the diagnostic unit 22 is input to the wind turbine controller 15 may be applied to any one of the above-described first to third embodiments.

As described above, a method of realizing the technique is described in the first to fifth embodiments, the technique classifying the detected value of the monitoring sensor according to the internal state variable of the wind turbine controller 15 to generate the diagnostic criteria for each internal state and to improve the accuracy of diagnosis. In the case of having a plurality of diagnosis targets, a plurality of sign diagnostic units 16 may be installed, or a plurality of some functions of such as the diagnostic unit 22 may be installed.

It should be noted that the present invention is not limited to the above-described embodiments, but includes various modifications.

For example, the above-described embodiments have been described in detail in order to explain the present invention in an easy-to-understand manner, and are not necessarily limited to those including all the configurations described. For example, a part of the configuration of one embodiment can be replaced with the configuration of another embodiment, and the configuration of another embodiment can be added to the configuration of one embodiment.

### Reference Signs List

- 1: wind power generation system
- 2: wind turbine
- 3: wind turbine control device
- 4: blade
- 5: hub
- 6: main shaft
- 7: speed increaser
- 8: generator
- 9: flame
- 10: nacelle
- 11: tower
- 12: power converter
- 13: control sensor
- 14: monitoring sensor
- 15: wind turbine controller
- 16: sign diagnostic unit
- 17: classifier
- 18: temporary storage unit
- 19: diagnostic criteria data generator
- 20: diagnostic criteria data storage unit
- 21: diagnostic criteria data selection extractor
- 22: diagnostic unit
- 23: diagnosis result storage unit
- 24: display device
- 25: sign diagnostic device

## Claims

1. A wind power generation system comprising a wind turbine controller that controls a wind turbine, and a sign diagnostic unit,
wherein the sign diagnostic unit receives at least a signal from a monitoring sensor installed in the wind turbine for sign diagnosis and an internal state variable which is a signal representing a wind turbine control state from the wind turbine controller, and
wherein the sign diagnostic unit comprises:
a diagnostic criteria data generator that creates diagnostic criteria data based on the signal input from the monitoring sensor for each internal state variable, during a learning period of analysis processing data required for sign diagnosis criteria or to execute the sign diagnosis; and
a diagnostic unit that executes the diagnosis based on the diagnostic criteria data corresponding to each internal state variable, during a sign diagnosing period.

2. The wind power generation system according to claim 1,
wherein the sign diagnostic unit has a classifier that determines whether or not the signal input from the monitoring sensor is adopted for learning and diagnosis of the sign diagnosis based on the internal state variable.

3. The wind power generation system according to claim 2,
wherein the sign diagnostic unit has a temporary storage unit that stores the signal input from the monitoring sensor for each internal state variable in order to create diagnostic criteria for sign diagnosis, and
wherein the sign diagnostic unit discards the signal input from the monitoring sensor and stored in the temporary storage unit after a predetermined time period has elapsed.

4. The wind power generation system according to claim 3,
wherein the internal state variable is a wind turbine control state defined by, among a rotation speed of a blade or generator, a blade pitch angle, a wind speed, and a wind turbulence intensity, one or a plurality of physical quantities including at least the rotation speed.

5. The wind power generation system according to claim 3,
wherein the sign diagnostic unit further receives a signal from a control sensor, the signal being received by the wind turbine controller to control the wind turbine.

6. The wind power generation system according to claim 4,
wherein the sign diagnostic unit further receives a signal from a control sensor, the signal being received by the wind turbine controller to control the wind turbine.

7. The wind power generation system according to claim 5,
wherein the sign diagnostic unit further receives a control command transmitted from the wind turbine controller to the wind turbine.

8. The wind power generation system according to claim 7,
wherein the diagnostic unit executes diagnosis based on the diagnostic criteria data corresponding to each internal state variable and outputs a degree of abnormality, and
wherein the degree of abnormality output from the diagnostic unit is input to the wind turbine controller, and according to the degree of abnormality that is input, the wind turbine controller transmits to the wind turbine, at least a control command to shift to a control mode of reducing a load at an abnormal site or a control mode of reducing a number of operation of an instrument having a high degree of abnormality.

9. The wind power generation system according to claim 3,
wherein the diagnostic unit executes diagnosis based on the diagnostic criteria data corresponding to each internal state variable and outputs a degree of abnormality, and
wherein the degree of abnormality output from the diagnostic unit is input to the wind turbine controller, and according to the degree of abnormality that is input, the wind turbine controller transmits to the wind turbine, at least a control command to shift to a control mode of reducing a load at an abnormal site or a control mode of reducing a number of operation of an instrument having a high degree of abnormality.

10. The wind power generation system according to claim 4,
wherein the diagnostic unit executes diagnosis based on the diagnostic criteria data corresponding to each internal state variable and outputs a degree of abnormality, and
wherein the degree of abnormality output from the diagnostic unit is input to the wind turbine controller, and according to the degree of abnormality that is input, the wind turbine controller transmits to the wind turbine, at least a control command to shift to a control mode of reducing a load at an abnormal site or a control mode of reducing a number of operation of an instrument having a high degree of abnormality.

11. The wind power generation system according to claim 5,
wherein the diagnostic unit executes diagnosis based on the diagnostic criteria data corresponding to each internal state variable and outputs a degree of abnormality, and
wherein the degree of abnormality output from the diagnostic unit is input to the wind turbine controller, and according to the degree of abnormality that is input, the wind turbine controller transmits to the wind turbine, at least a control command to shift to a control mode of reducing a load at an abnormal site or a control mode of reducing a number of operation of an instrument having a high degree of abnormality.

12. A wind power generation system comprising a wind turbine controller that controls a wind turbine, and a sign diagnostic unit,
wherein the sign diagnostic unit receives at least a signal from a control sensor received by the wind turbine controller to control the wind turbine and a control command transmitted from the wind turbine controller to the wind turbine, and an internal state variable which is a signal representing a wind turbine control state from the wind turbine controller, and
wherein the sign diagnostic unit comprises:
a diagnostic criteria data generator that creates diagnostic criteria data based on the signal input from the control sensor for each internal state variable, during a learning period of analysis processing data required for sign diagnosis criteria or to execute the sign diagnosis; and
a diagnostic unit that executes the diagnosis based on the diagnostic criteria data corresponding to each internal state variable, during a sign diagnosing period.

13. The wind power generation system according to claim 12,
wherein the sign diagnostic unit has a classifier that determines whether or not the signal input from the control sensor is adopted for learning and diagnosis of the sign diagnosis based on the internal state variable.

14. The wind power generation system according to claim 13,
wherein the sign diagnostic unit has a temporary storage unit that stores a signal input from the control sensor for each internal state variable in order to create diagnostic criteria for sign diagnosis, and
wherein the sign diagnostic unit discards the signal input from the control sensor and stored in the temporary storage unit after a predetermined time period has elapsed.

15. The wind power generation system according to claim 14,
wherein the internal state variable is a wind turbine control state defined by, among a rotation speed of a blade or generator, a blade pitch angle, a wind speed, and a wind turbulence intensity, one or a plurality of physical quantities including at least the rotation speed.
